# EUROPEAN PATENT APPLICATION

(11) **EP 4 633 065 A1**
(43) Date of publication of application: **15.10.2025**
(21) Application number: 24169856.2
(22) Date of filing: 12.04.2024
(51) Int. Cl.: H04B 17/00, H04B 17/10, H04B 17/15

(54) **TEST DEVICE, SYSTEM, AND METHOD FOR ESTIMATING A DELAY CAUSED BY A DUT CONVERTING A VOICE-BASED SIGNAL INTO A RADIO SIGNAL**

(71) Applicant: Rohde & Schwarz GmbH & Co. KG, 81671 München (DE)
(72) Inventor: Hendeli, Markus, 82256 Aich (DE); Aves, Glenn, 85604 Zorneding (DE); Alam, Atif, Fleet, GU51 3YX (GB)
(74) Representative: Rupp, Christian

(57) **Abstract**

A test device (10) for estimating a delay caused by a device under test (19), DUT, converting a voice-based signal into a radio signal, comprising a generating unit (11) configured to generate a voice-based test signal comprising a predefined audio pattern, a transmitting unit (12) configured to transmit the voice-based test signal to the DUT (19), a receiving unit (13) configured to receive and/or demodulate as a receive signal, a test radio signal from the DUT (19) having converted the voice-based test signal into said test radio signal, and a processing unit (14) configured to associate a first time stamp with the corresponding time of transmission of the predefined audio pattern transmitted by the transmitting unit, to detect the predefined audio pattern with respect to the receive signal, to set a second time stamp if the predefined audio pattern is detected, and to estimate the delay based on the first time stamp and the second time stamp.

## Description

The invention relates to a test device, a test system, and a method for estimating a delay caused by a device under test, DUT, converting a voice-based signal into a radio signal. In particular, the invention relates to a test device, a test system, and a method for estimating a delay caused by an air traffic control, ATC, transmitter, converting a voice over Internet Protocol, VoIP, signal into a radio signal.

Generally, in times of an increasing number of air traffic control, ATC, radios, especially supporting EUROCAE ED137B/C standard, there is a growing need of a test device, a test system, and a method for estimating a delay caused by a device under test, DUT, especially by such a radio, converting a voice-based signal into a radio signal in order to verify corresponding correct functioning especially in so far that said radios do not to exceed a certain delay between the incoming audio signal, especially via Voice over Internet Protocol, VoIP, and the same audio signal to be on the air.

WO 2021/088345 A1 relates to a VoIP radio gateway with a master-standby architecture based on the ED137 protocol, which includes a core switching module, a master-standby server selection module, a media signaling interaction module, and a system operation and maintenance module.

Disadvantageously, such a configuration does not allow for a delay estimation as described above in a particularly efficient and accurate manner.

Accordingly, there is the object to provide a test device, a test system, and a method for estimating a delay caused by a device under test, DUT, converting a voice-based signal into a radio signal, thereby ensuring a particularly high efficiency and accuracy of the delay estimation.

This object is solved by the features of the first independent claim for a test device for estimating a delay caused by a DUT converting a voice-based signal into a radio signal, the features of the second independent claim for a test system for estimating a delay caused by a DUT converting a voice-based signal into a radio signal, and the features of the third independent claim for a method for estimating a delay caused by a DUT converting a voice-based signal into a radio signal. The dependent claims contain further developments.

According to a first aspect of the invention, a test device for estimating a delay caused by a device under test, DUT, converting a voice-based signal into a radio signal is provided. Said test device comprises a generating unit configured to generate a voice-based test signal comprising a predefined audio pattern, a transmitting unit configured to transmit the voice-based test signal to the DUT, a receiving unit configured to receive and/or demodulate as a receive signal, a test radio signal from the DUT having converted the voice-based test signal into said test radio signal, and a processing unit. In this context, the processing unit is configured to associate a first time stamp with the corresponding time of transmission of the predefined audio pattern transmitted by the transmitting unit. Additionally, the processing unit is configured to detect the predefined audio pattern with respect to the receive signal. Furthermore, the processing unit is configured to set a second time stamp if the predefined audio pattern is detected. In addition to this, the processing unit is configured to estimate the delay based on the first time stamp and the second time stamp. Advantageously, a particularly high efficiency and accuracy of the delay estimation can be ensured. Further advantageously, the delay estimation can be automated with no manual interaction, can be simple to set up, and is insensitive to errors.

According to an implementation form of the first aspect of the invention, the DUT comprises or is an air traffic control, ATC, transmitter, preferably in the form of a software-defined radio, and/or a military radio. Advantageously, for instance, ATC radio supporting EUROCAE ED137B/C standard can efficiently be test, especially in the sense of fulfilling the corresponding requirements of said standard, which can analogously apply for the following implementation form.

According to a further implementation form of the first aspect of the invention, the voice-based test signal comprises or is a voice over Internet Protocol, VoIP, test signal.

According to a further implementation form of the first aspect of the invention, the predefined audio pattern comprises at least two different test frequencies which switch or alternate at least one time, especially during the corresponding transmission. Advantageously, for example, based on such a frequency change, time stamps can be created in particularly efficient manner, which can analogously apply for the following implementation form.

According to a further implementation form of the first aspect of the invention, the second time stamp is set by the processing unit based on a detection of the corresponding at least one frequency change.

For instance, the generating unit may be configured to generate the voice-based test signal comprising the predefined audio pattern such that the predefined audio pattern comprises a portion where it switches from a first frequency to a second frequency, especially in order to create the first time stamp. Further exemplarily, the DUT processes said voice-based test signal and transmits it over the air, especially in an AM modulated manner, as the test radio signal. Moreover, especially after having received said test radio signal as the receive signal, the processing unit can create the second time stamp at the time of the corresponding frequency change.

According to a further implementation form of the first aspect of the invention, the processing unit is configured to correct the estimated delay with respect to the corresponding time for demodulating the test radio signal, especially according to a predefined correction time. Advantageously, for instance, accuracy of delay estimation can further be increased.

According to a further implementation form of the first aspect of the invention, the predefined correction time is between 2 milliseconds and 12 milliseconds, preferably between 4 milliseconds and 10 milliseconds, more preferably between 5 milliseconds and 9 milliseconds, most preferably between 6.5 milliseconds and 7.5 milliseconds. Advantageously, for example, complexity can be reduced, thereby increasing efficiency.

According to a further implementation form of the first aspect of the invention, the delay is estimated by subtracting the first time stamp from the second time stamp. Advantageously, for instance, both accuracy and efficiency of delay estimation can further be increased.

According to a further implementation form of the first aspect of the invention, the delay comprises or is processing time of the DUT, especially with respect to converting the voice-based signal into the radio signal. Advantageously, for example, said processing time can take also take into account modulating the voice-based signal to an AM radio signal.

According to a further implementation form of the first aspect of the invention, the transmitting unit comprises an Internet Protocol, IP, interface, especially connectable to the DUT. In addition to this or as an alternative, the receiving unit comprises an air interface, especially for communicating with the DUT. Advantageously, for instance, the air interface can comprise or be an antenna connector.

According to a further implementation form of the first aspect of the invention, the test device further comprises a common clock generating unit configured to provide a common clock for each of the generating unit and the receiving unit. Advantageously, for example, the generating unit and the receiving unit can be synchronized in a particularly efficient manner.

It is noted that the generating unit can comprise the transmitting unit. Accordingly, in such a case, the generating unit allows for complete functionality regarding generating and transmitting the voice-based test signal to the DUT. Furthermore, the processing unit can comprise the receiving unit. Accordingly, in such a case, the processing unit allows for complete functionality regarding receiving and/or demodulating and processing the test radio signal. Especially in the light of the above-mentioned common clock generating unit, it might be particularly advantageous if, preferably in such a case, the common clock generating unit is configured to provide a common clock for each of the generating unit and the processing unit.

According to a second aspect of the invention, a test system for estimating a delay caused by a device under test, DUT, converting a voice-based signal into a radio signal is provided. Said test system comprises a test device according to the first aspect of the invention or any of its implementation forms, respectively, and the DUT. Advantageously, a particularly high efficiency and accuracy of the delay estimation can be ensured. Further advantageously, the delay estimation can be automated with no manual interaction, can be simple to set up, and is insensitive to errors.

According to an implementation form of the second aspect of the invention, the DUT comprises or is an air traffic control, ATC, transmitter, preferably in the form of a software-defined radio. Advantageously, for instance, ATC radio supporting EUROCAE ED137B/C standard can efficiently be test, especially in the sense of fulfilling the corresponding requirements of said standard.

According to a third aspect of the invention, a method, especially using a test device according to the first aspect of the invention or any of its implementation forms, respectively, for estimating a delay caused by a device under test, DUT, converting a voice-based signal into a radio signal is provided. Said method comprises the steps of generating a voice-based test signal comprising a predefined audio pattern, transmitting the voice-based test signal to the DUT and associating a first time stamp with the corresponding time of transmission of the predefined audio pattern, converting the voice-based test signal with the aid of the DUT into a test radio signal, transmitting the test radio signal with the aid of the DUT, receiving and/or demodulating the test radio signal as a receive signal, detecting the predefined audio pattern, setting a second time stamp if the predefined audio pattern is detected, and estimating the delay based on the first time stamp and the second time stamp. Advantageously, a particularly high efficiency and accuracy of the delay estimation can be ensured. Further advantageously, the delay estimation can be automated with no manual interaction, can be simple to set up, and is insensitive to errors.

According to an implementation form of the third aspect of the invention, the method further comprises the step of correcting the estimated delay with respect to the corresponding time for demodulating the test radio signal, especially according to a predefined correction time. Advantageously, for instance, accuracy of delay estimation can further be increased.

Exemplary embodiments of the invention are now further explained with respect to the drawings by way of example only, and not for limitation. In the drawings:
- Fig. 1: shows a first exemplary embodiment of a test device in combination with a test system;
- Fig. 2: shows a second exemplary embodiment of a test device in combination with a test system; and
- Fig. 3: shows a flow chart of an embodiment of the third aspect of the invention.

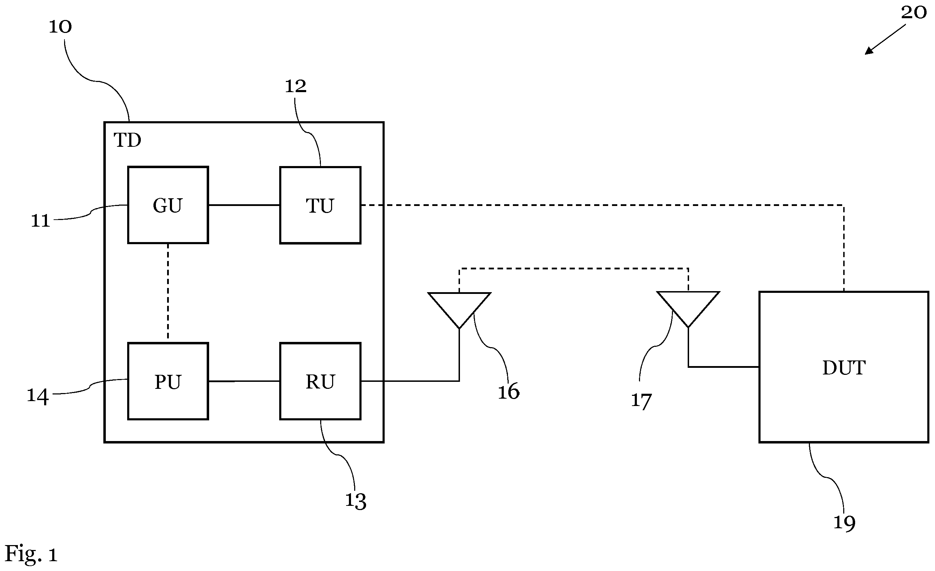

With respect to Fig. 1, a block diagram of a first exemplary embodiment of a test device 10 for estimating a delay caused by a device under test, DUT, 19 converting a voice-based signal into a radio signal is shown. For the sake of completeness, it is noted that said Fig. 1 additionally illustrates a test system 20 comprising said test device 10 and said DUT 19.

In accordance with Fig. 1, the test device 10 comprises a generating unit 11 configured to generate a voice-based test signal comprising a predefined audio pattern, a transmitting unit 12 configured to transmit the voice-based test signal to the DUT 19, a receiving unit 13 configured to receive and/or demodulate as a receive signal, a test radio signal from the DUT 19 having converted the voice-based test signal into said test radio signal, and a processing unit 14.

In this context, the processing unit 14 is configured to associate a first time stamp with the corresponding time of transmission of the predefined audio pattern transmitted by the transmitting unit 12. Furthermore, the processing unit 14 is configured to detect the predefined audio pattern with respect to the receive signal. Moreover, the processing unit 14 is configured to set a second time stamp if the predefined audio pattern is detected. In addition to this, the processing unit 14 is configured to estimate the delay based on the first time stamp and the second time stamp.

As it can further be seen from Fig. 1, the receiving unit 13 may be connected to an antenna 16. It is also possible that the receiving unit 13 comprises the antenna 16. The DUT 19 may be connected to an antenna 17. It is also possible that the DUT 19 comprises the antenna 17.

Preferably, the connection between the transmitting unit 12 and the DUT 19 comprises or is an Internet Protocol, IP, connection, especially a wired IP connection, and the connection between the DUT 19 and the receiving unit 13 comprises or is a wireless connection, especially a radio connection or a radio frequency connection.

It is noted that it might be particularly advantageous if the DUT 19 comprises or is an air traffic control, ATC, transmitter, preferably in the form of a software-defined radio, and/or a military radio.

It is further noted that it might be particularly advantageous if the voice-based test signal comprises or is a voice over Internet Protocol, VoIP, test signal.

With respect to the above-mentioned predefined audio pattern, it is noted that might be particularly advantageous if the predefined audio pattern comprises at least two different test frequencies which switch or alternate at least one time, especially during the corresponding transmission.

In this context, it might be particularly advantageous if the above-mentioned second time stamp is set by the processing unit 14 based on a detection of the corresponding at least one frequency change.

Furthermore, the processing unit 14 may be configured to correct the estimated delay with respect to the corresponding time for demodulating the test radio signal, especially according to a predefined correction time.

With respect to said predefined correction time, it is noted that it might be particularly advantageous if the predefined correction time is between 2 milliseconds and 12 milliseconds, preferably between 4 milliseconds and 10 milliseconds, more preferably between 5 milliseconds and 9 milliseconds, most preferably between 6.5 milliseconds and 7.5 milliseconds.

With respect to the above-mentioned delay, it is noted that it might be particularly advantageous if the delay is estimated by subtracting the first time stamp from the second time stamp.

Moreover, said delay may exemplarily comprise or be processing time of the DUT 19, especially with respect to converting the voice-based signal into the radio signal.

As already indicated above, it might be particularly advantageous if the transmitting unit 12 comprises an Internet Protocol, IP, interface, especially connectable to the DUT 19. In addition to this or as an alternative, it might be particularly advantageous if the receiving unit 14 comprises an air interface, especially for communicating with the DUT 19.

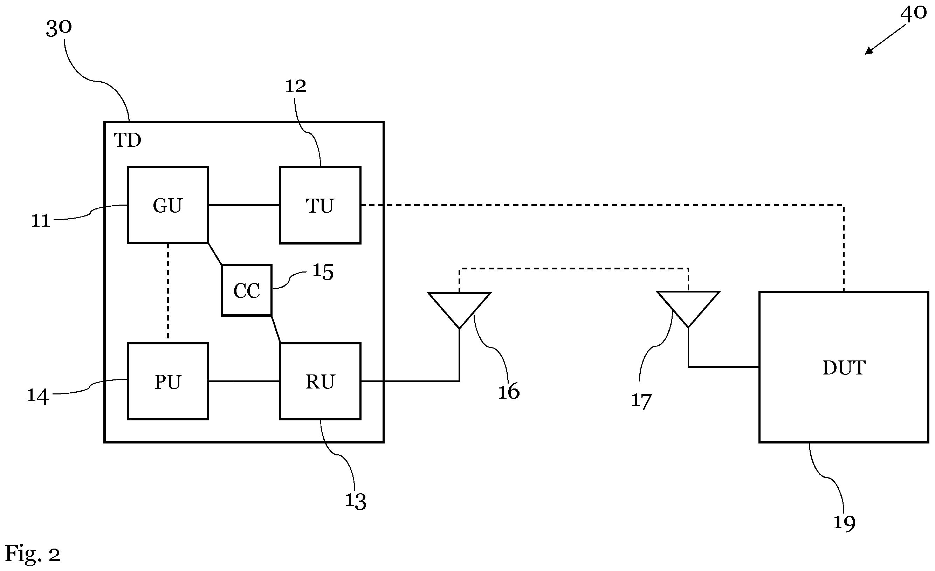

Now, with respect to Fig. 2, a block diagram of a second exemplary embodiment of a test device 30 for estimating a delay caused by the DUT 19 converting a voice-based signal into a radio signal is illustrated. For the sake of completeness, it is noted that said Fig. 2 additionally depicts a test system 40 comprising said test device 30 and said DUT 19.

It is further noted that said test device 30 or said test system 40, respectively, according to Fig. 2 is based on the above-mentioned test device 10 or the above-mentioned test system 20, respectively according to Fig. 1 with the difference that the test device 30 of Fig. 2 additionally comprises a common clock generating unit 15 configured to provide a common clock for each of the generating unit 11 and the receiving unit 13. Accordingly, said common clock generating unit 15 is exemplarily connected to each of the generating unit 11 and the receiving unit 13.

With respect to each of the first exemplary embodiment according to Fig. 1 and the second exemplary embodiment according to Fig. 2, it is noted that the generating unit 11 is exemplarily connected to the transmitting unit 12, and the receiving unit 13 is exemplarily connected to the processing unit 14.

It is further noted that it might be particularly advantageous if the processing unit 14 is configured to control the generating unit 11. Accordingly, the processing unit 14 may exemplarily be connected to the generating unit 11.

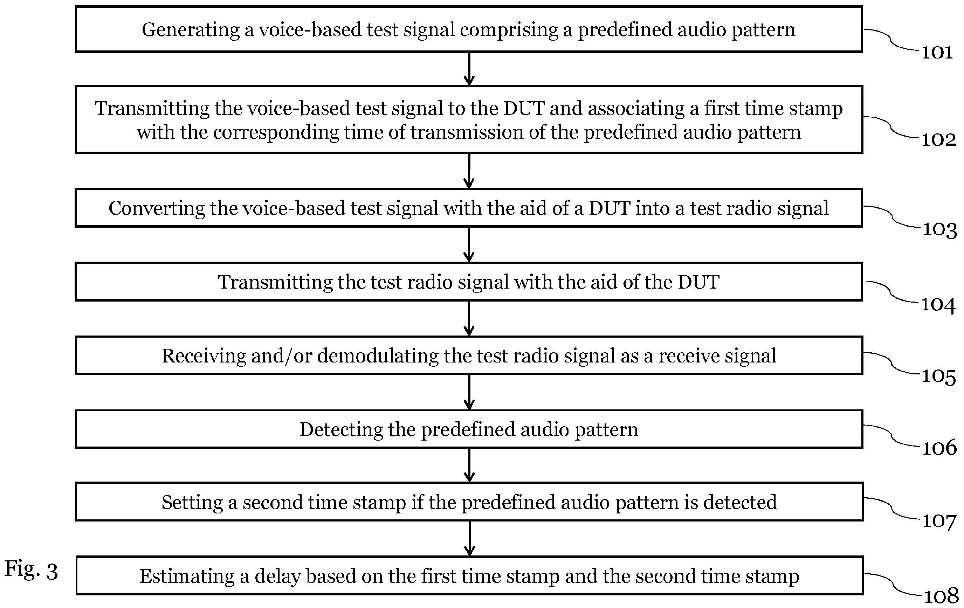

Finally, Fig. 3 shows a flow chart of an exemplary embodiment of a method, especially using the above-mentioned test device 10 or 30, or the above-mentioned test system 20 or 40, respectively, for estimating a delay caused by a device under test, such as the above-mentioned DUT 19, converting a voice-based signal into a radio signal.

As it can be seen from said Fig. 3, a first step 101 comprises generating a voice-based test signal comprising a predefined audio pattern, especially with the aid of the above-mentioned generating unit 11. A second step 102 comprises transmitting the voice-based test signal to the DUT and associating a first time stamp with the corresponding time of transmission of the predefined audio pattern, especially with the aid of the above-mentioned transmitting unit 12. A third step 103 comprises converting the voice-based test signal with the aid of the DUT into a test radio signal. A fourth step 104 comprises transmitting the test radio signal with the aid of the DUT. A fifth step 105 comprises receiving and/or demodulating the test radio signal as a receive signal, especially with the aid of the above-mentioned receiving unit 13. A sixth step 106 comprises detecting the predefined audio pattern, especially with the aid of the receiving unit 13 or the above-mentioned processing unit 14. A seventh step 107 comprises setting a second time stamp if the predefined audio pattern is detected, especially with the aid of the processing unit 14. An eighth step 108 comprises estimating the delay based on the first time stamp and the second time stamp, especially with the aid of the processing unit 14.

It is noted that the voice-based test signal may comprise or be a voice over Internet Protocol, VoIP, test signal.

It is further noted that it might be particularly advantageous if the predefined audio pattern comprises at least two different test frequencies which switch or alternate at least one time, especially during the corresponding transmission.

In this context, it might be particularly advantageous if the method further comprises the step of setting the second time stamp based on a detection of the corresponding at least one frequency change, especially with the aid of the processing unit 14.

Moreover, it might be particularly advantageous if the method further comprises the step of correcting the estimated delay with respect to the corresponding time for demodulating the test radio signal, especially according to a predefined correction time, exemplarily with the aid of the processing unit 14.

In this context, it might be particularly advantageous if the predefined correction time is between 2 milliseconds and 12 milliseconds, preferably between 4 milliseconds and 10 milliseconds, more preferably between 5 milliseconds and 9 milliseconds, most preferably between 6.5 milliseconds and 7.5 milliseconds.

It is noted that it might be particularly advantageous if the method further comprises the step of subtracting the first time stamp from the second time stamp in order to estimate the delay.

It is further noted that the delay may comprise or be processing time of the DUT, especially with respect to converting the voice-based signal into the radio signal.

Moreover, it might be particularly advantageous if the method further comprises the step of synchronizing the step of generating the voice-based test signal and the step of receiving and/or demodulating the test radio signal, especially with the aid of the above-mentioned common clock generating unit 15.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A test device (10, 30) for estimating a delay caused by a device under test (19), DUT, converting a voice-based signal into a radio signal, the test device (10, 30) comprising:
a generating unit (11) configured to generate a voice-based test signal comprising a predefined audio pattern,
a transmitting unit (12) configured to transmit the voice-based test signal to the DUT (19),
a receiving unit (13) configured to receive and/or demodulate as a receive signal, a test radio signal from the DUT (19) having converted the voice-based test signal into said test radio signal, and
a processing unit (14),
wherein the processing unit (14) is configured to associate a first time stamp with the corresponding time of transmission of the predefined audio pattern transmitted by the transmitting unit (12),
wherein the processing unit (14) is configured to detect the predefined audio pattern with respect to the receive signal,
wherein the processing unit (14) is configured to set a second time stamp if the predefined audio pattern is detected, and
wherein the processing unit (14) is configured to estimate the delay based on the first time stamp and the second time stamp.

2. The test device (10, 30) according to claim 1,
wherein the DUT (19) comprises or is an air traffic control, ATC, transmitter, preferably in the form of a software-defined radio, and/or a military radio.

3. The test device (10, 30) according to claim 1 or 2,
wherein the voice-based test signal comprises or is a voice over Internet Protocol, VoIP, test signal.

4. The test device (10, 30) according to any of the claims 1 to 3,
wherein the predefined audio pattern comprises at least two different test frequencies which switch or alternate at least one time, especially during the corresponding transmission.

5. The test device (10, 30) according to claim 4,
wherein the second time stamp is set by the processing unit (14) based on a detection of the corresponding at least one frequency change.

6. The test device (10, 30) according to any of the claims 1 to 5,
wherein the processing unit (14) is configured to correct the estimated delay with respect to the corresponding time for demodulating the test radio signal, especially according to a predefined correction time.

7. The test device (10, 30) according to claim 6,
wherein the predefined correction time is between 2 milliseconds and 12 milliseconds, preferably between 4 milliseconds and 10 milliseconds, more preferably between 5 milliseconds and 9 milliseconds, most preferably between 6.5 milliseconds and 7.5 milliseconds.

8. The test device (10, 30) according to any of the claims 1 to 7,
wherein the delay is estimated by subtracting the first time stamp from the second time stamp.

9. The test device (10, 30) according to any of the claims 1 to 8,
wherein the delay comprises or is processing time of the DUT (19), especially with respect to converting the voice-based signal into the radio signal.

10. The test device (10, 30) according to any of the claims 1 to 9,
wherein the transmitting unit (12) comprises an Internet Protocol, IP, interface, especially connectable to the DUT (19), and/or
wherein the receiving unit (13) comprises an air interface, especially for communicating with the DUT (19).

11. The test device (30) according to any of the claims 1 to 10, further comprising:
a common clock generating unit (15) configured to provide a common clock for each of the generating unit (11) and the receiving unit (13).

12. A test system (20, 40) for estimating a delay caused by a device under test (19), DUT, converting a voice-based signal into a radio signal, the test system (20, 40) comprising:
a test device (10, 30) according to any of the claims 1 to 11, and
the DUT (19).

13. The test system (20, 40) according to claim 12, wherein the DUT (19) comprises or is an air traffic control, ATC, transmitter, preferably in the form of a software-defined radio.

14. A method, especially using a test device (10, 30) according to any of the claims 1 to 11, for estimating a delay caused by a device under test (19), DUT, converting a voice-based signal into a radio signal, the method comprising the steps of:
generating (101) a voice-based test signal comprising a predefined audio pattern,
transmitting (102) the voice-based test signal to the DUT (19) and associating a first time stamp with the corresponding time of transmission of the predefined audio pattern,
converting (103) the voice-based test signal with the aid of the DUT (19) into a test radio signal,
transmitting (104) the test radio signal with the aid of the DUT (19),
receiving and/or demodulating (105) the test radio signal as a receive signal,
detecting (106) the predefined audio pattern,
setting (107) a second time stamp if the predefined audio pattern is detected, and
estimating (108) the delay based on the first time stamp and the second time stamp.

15. The method according to claim 14, further comprising the step of:
correcting the estimated delay with respect to the corresponding time for demodulating the test radio signal, especially according to a predefined correction time.
